# EUROPEAN PATENT APPLICATION

(11) **EP 4 391 552 A1**
(43) Date of publication of application: **26.06.2024**
(21) Application number: 22216929.4
(22) Date of filing: 28.12.2022
(51) Int. Cl.: H04N 21/234, G06F 16/90, G06V 20/40, H04N 21/44, H04N 21/472, H04N 21/845, H04N 21/8543, H04N 21/482

(54) **METHOD AND SYSTEM FOR GENERATING VIDEO STREAMING CONTENT BOOKMARKS**

(30) Priority: 23.12.2022 PT 2022118434
(71) Applicant: NOS Inovação, S.A., 4460-191 Senhora da Hora (PT)
(72) Inventor: PINTO SEQUEIRA DOS SANTOS GRAÇA, JORGE FILIPE, 4460-191 SENHORA DA HORA (PT); NUNES FERREIRA, JOÃO MIGUEL, 4460-191 SENHORA DA HORA (PT); FERREIRA MARTINS, CARLOS MANUEL, 4460-191 SENHORA DA HORA (PT); DAVID RECHENA, PEDRO MIGUEL, 4460-191 SENHORA DA HORA (PT); PIMENTEL FERNANDES MAIO, CAROLINA, 4460-191 SENHORA DA HORA (PT); PRETO XAVIER, TIAGO FRANCISCO, 4460-191 SENHORA DA HORA (PT); SOARES CAPITÃO, PEDRO MIGUEL, 4460-191 SENHORA DA HORA (PT); RODRIGUES FERREIRA MELO, ORLANDO DUARTE, 4460-191 SENHORA DA HORA (PT); SOUSA ROSA DA CRUZ FERNANDES, BRUNO DE, 4460-191 SENHORA DA HORA (PT)
(74) Representative: do Nascimento Gomes, Rui

(57) **Abstract**

The present application relates to a computer implemented method and system for generating video streaming content bookmarks. Such method therefore allows to identify key moments of an event being broadcasted, such as a sporting event or a news/entertainment program, and to consult directly these moments either on a data query platform or on a rail of shortcuts in the User Interface of a content viewer service. The method comprises processing each video frame in order to detect a banner tag embedded a frame, extracting character data from the banner tag, generating a content bookmark by aggregating a set of video streaming frames and creating a visually-presentable video clip, and providing a video clip to a user upon selection of the respective bookmark.

## Description

### FIELD OF THE APPLICATION

The present application relates to bookmarking a video streaming content.

### PRIOR ART

Real time streaming, recording, and playback of videos have become more and more prevalent. However, viewing videos have historically been a passive experience between a user and the viewing interface. For instance, a user may typically push a play button to view an entire video to discover relevant content that interests the user. The time spent viewing an entire video may amount to countless hours of unproductive and wasted time viewing material not pertinent to the user. Thus, developments have been made to improve the efficiency of the viewing experience.

Particularly, a user may avoid re-watching an entire video or randomly predict the location of pertinent clips by bookmarking relevant segments of the video during the viewing process. The bookmarks may enable a user to playback and save the relevant segments for viewing at a later date. Moreover, users may use bookmarks generated by an administrator to track, playback, and direct a user to relevant sections of a video. The administrator may attempt to set bookmarks where the administrator believes to be important junctures of a video.

Despite these improvements, they fall short in providing a user with an effective way to automatically generate bookmark video streaming clips, based on video streaming information content. For example, when the video streaming concerns a news program, there is no efficient way of segmenting the video according to the different topics covered, not allowing the user to access only segments of the video that relate to a particular topic.

The present solution intended to innovatively overcome such issues.

### SUMMARY OF THE APPLICATION

It is therefore an object of the present application a computer implemented method for generating video streaming content bookmarks. Such method therefore allows to identify key moments of an event being broadcasted, such as a sporting event or a news/entertainment program, and to consult directly these moments either on a data query platform or on a rail of shortcuts in the User Interface of a content viewer service.

For the implementation of the method described herein, a new methodology is developed based on text recognition mechanisms, that allows to:
- Identify/detect, in a given video frame, regions of interest containing character data, such as, for example, the oracle or "banner" with the title and sub-title of the media piece displayed in the event/program being video broadcasted.
- Extract/transcribe these titles and subtitles from each media piece.
- Compile the aggregate of titles (and sub-titles) extracted, generating a video streaming content bookmark.
- Make the bookmarks available for a platform to be consulted and/or viewed, such as a dashboard in PowerBi or a rail of bookmarks in a user interface of a content viewer service (set-top-box, OTT, etc.).

It is also an object of the present application a system for implemented the method of generating video streaming content bookmarks.

### DESCRIPTION OF FIGURES

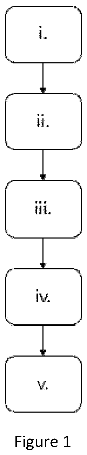

Figure 1 - representation of an embodiment of the computer implemented method described in the present application, wherein the reference signs represent:
i. method step for receiving a video streaming broadcast from a broadcaster;
ii. method step for processing each video frame in order to detect a banner tag embedded a frame;
iii. method step for extracting character data from a banner tag embedded in a frame;
iv. method step for generating a content bookmark by aggregating a set of video streaming frames and for creating a visually-presentable video clip;
v. method step for providing a video clip to a user upon selection of the respective bookmark.

### DETAILED DESCRIPTION

The more general and advantageous configurations of the present application are described in the Summary. Such configurations are detailed below in accordance with other advantageous and/or preferred embodiments of method and system developed.

The present application relates to a computer implemented method for generating video content bookmarks.

In the context of the present application, a video content bookmark is a is a video marker, which segments the video streaming in accordance to the type of content being broadcast. For example, a type of content may relate to a sporting event, such as the highlights of a football war, such as goals or attacking plays, or it may relate to a news program being directed to identify news related to politics, culture, economy or industry. By being made available to a user, it allows him to view only the segments of the video streaming related to a relevant type of content, not having to watch the entire video. The segmentation being done automatically and not by an administrator, allows the detection of relevant content within a video streaming broadcast to be done more quicky and effectively.

The basis for this segmentation and consequent creation of content bookmarks, is the detection of regions of interest within a video frame, which include a banner tag. Such banner tag allows to classify the content being presented, and by aggregating video frames having the same or interrelated content, a video clip may be created which can be access by the user through a respective content bookmark.

In a preferred embodiment of the method for generating video content bookmarks described in the present application, it is comprised by the following steps:
In a first step of the method, a video streaming broadcast is received from a broadcaster. A video streaming relates to an audio-visual media content, for example being related to a sporting event or to news/entertainment program, that is to be displayed on a client's device, being broadcasted from a broadcast source such as satellite, cable, internet, etc. In this context, a client device is intended to encompass set top boxes, satellite receivers, digital video recorders, and the like. A client device may also be embodied in software and/or hardware that facilitate the reception and display of events from a broadcast source of any suitable type (e.g., satellite, Internet protocol, wireless, etc.).
In a second step of the method, each video frame is processed in order to a banner tag embedded in said frame. A banner tag or an "oracle" is typically a text box that summarizes the type of content being broadcast, containing character data in the form of a title and in some cases of also a sub-title. The text box may have different geometric shapes, as well as the font displayed may be varied, however, the identification of such "summary description" in a video frame, allows classifying the video content by topics, which is the basis for the generation of content bookmarks.
To achieve this purpose, in a third step of the method, character data is extracted from a banner tag embedded in a frame. A character data corresponds to textual information, being for example, the summary description contained in a banner tag of a news program.
In a fourth step of the method, content bookmark is generated by aggregating a set of video streaming frames comprised by banner tag's character data corresponding to the same textual information. After that, a visually-presentable video clip formed by said set of video streaming frames, is created.
Finally, in a fifth step of the method, in response to a user command selecting a content bookmark, the respective video clip is provided in a viewing interface.

In one embodiment of the method, the detection of a banner tag in a frame is performed using a machine learning module adapted to classify each video streaming frame according to a classification model. More particularly, said detection may include the following steps:
- training the machine learning module using a training dataset adapted for detecting a banner tag in a frame of a video streaming broadcast;
- supplying the video streaming broadcast to the machine learning module;
- generating frame metadata to classify each video streaming frame according to a classification model;
- selecting video streaming frames with an embedded banner tag, according to said classification model.

The machine learning training dataset may be generated by applying image processing, such as random flip horizontal transformation, random rotation transformation or random zoom transformation (for example having a 10% probability), and/or data augmentation techniques to an original training dataset comprised by a set of training video frames. This step is very relevant especially in case the original training set is small and/or of low diversity, allowing to create a new set of more robust training data.

The machine learning module used for banner tag detection may be a classifier convolutional neural network, used to implement a binary classification model, constituted by two classes:
- a banner class if a banner tag is detected in a video streaming frame; and
- a non-banner class if no banner tag is detected in a video streaming frame.

In another embodiment of the method, the step of extracting character data from the banner tag embedded in a video streaming frame comprises:
- supplying a video streaming frame containing an embedded banner tag to an image processing module programmed to implement optical character recognition algorithms in order to detect regions of interest in said frame, said regions of interest containing character data;
- filtering the video streaming frame's regions of interest to extract character data from the embedded banner tag.

More particularly, extracting character data from the embedded banner tag may comprise:
- training a machine learning module using a training dataset adapted to identify at least one region of interest in a video streaming frame containing a banner tag;
- supplying a video streaming frame with an embedded banner tag to the machine learning module;
- generating frame metadata to classify regions of interest within the video streaming frame according to a binary classification model constituted by two classes: a first class if a frame's region of interest contains a banner tag; and a second class if a frame's region of interest does not contain a banner tag;
- using said classification model to select frame's region of interest containing a banner tag;
- extracting character data from the selected frame's region of interest.

The machine learning module used to identify regions of interest within a video frame is a classifier adapted to implement K-means algorithms, since it is intended that such clustering algorithm be able to segregate different types of text in a controlled environment, also having the advantage of not being necessary to treat a dataset for the use of supervised learning approaches. The classification model may be based at least on the following features extracted from the output of the image processing module: number of letters, position width and height of character data contained in a region of interest of a frame having an embedded banner tag. More particularly, a region of interest is classified as containing a banner tag if said region of interest is positioned in a bottom third of a frame. In fact, considering that titles/subtitles contained in a banner tag typically appear in the bottom part of the screen (frame), all the image processing module outputs with a centre position greater than, for example 0.67, may be excluded, that is, classified as region of interest not containing a banner tag.

Additionally, the image processing module may be a cloud-based module, such as the Google Cloud Vision.

In another embodiment of the method, the step of providing the video clip in a viewing interface comprises indexing content bookmarks in a data structure of content bookmarks. The data structure may be a relational database, comprising a plurality of fields adapted to establish a correspondence between a content bookmark with the respective video clip. The user command is a search string that may be interpreted in a query mechanism adapted to identify the specific content bookmark which the user intends to view the respective video content.

As will be clear to one skilled in the art, the present application should not be limited to the embodiments described herein, and a number of changes are possible which remain within the scope of the present application.

Of course, the preferred embodiments shown above are combinable, in the different possible forms, being herein avoided the repetition all such combinations.

## Claims

1. Computer implemented method for generating video content bookmarks comprising the following steps:
i. receiving a video streaming broadcast from a broadcaster;
ii. processing each video frame in order to detect a banner tag embedded in said frame;
iii. extracting character data from a banner tag embedded in a frame; said character data corresponding to textual information;
iv. generating a content bookmark by aggregating a set of video streaming frames comprised by banner tag's character data corresponding to the same textual information and creating a visually-presentable video clip formed by said set of video streaming frames;
v. responsive to a user command selecting a content bookmark, providing the respective video clip in a viewing interface.

2. Method according to claim 1, wherein the banner tag detection step is performed using a machine learning module adapted to classify each video streaming frame according to a classification model; said step comprising:
- training the machine learning module using a training dataset adapted for detecting a banner tag in a frame of a video streaming broadcast;
- supplying the video streaming broadcast to the machine learning module;
- generating frame metadata to classify each video streaming frame according to a classification model;
- selecting video streaming frames with an embedded banner tag, according to said classification model.

3. Method according to claim 2, wherein the generation of a training dataset comprises applying image processing and/or data augmentation techniques to an original training dataset comprised by a set of training video frames.

4. Method according to claim 3, wherein the image processing techniques are at least one or a combination of the following: random flip horizontal transformation, random rotation transformation and random zoom transformation; optionally, the random rotation and/or the random zoom transformations have a 10% probability.

5. Method according to any of the claims 2 to 4, wherein the classification model is a binary classification model, constituted by two classes:
- a banner class if a banner tag is detected in a video streaming frame; and
- a non-banner class if no banner tag is detected in a video streaming frame.

6. Method, according to any of the claims 2 to 5, wherein the machine learning module is a Classifier Convolutional Neural Network.

7. Method according to any of the previous claims wherein the step of extracting character data from the banner tag embedded in a video streaming frame comprises:
- supplying a video streaming frame containing an embedded banner tag to an image processing module programmed to implement optical character recognition algorithms in order to detect regions of interest in said frame, said regions of interest containing character data;
- filtering the video streaming frame's regions of interest to extract character data from the embedded banner tag.

8. Method according to claim 7, wherein extracting character data from the embedded banner tag comprises:
- training a machine learning module using a training dataset adapted to identify at least one region of interest in a video streaming frame containing a banner tag;
- supplying a video streaming frame with an embedded banner tag to the machine learning module;
- generating frame metadata to classify regions of interest within the video streaming frame according to a binary classification model constituted by two classes: a first class if a frame's region of interest contains a banner tag; and a second class if a frame's region of interest does not contain a banner tag;
- using said classification model to select frame's region of interest containing a banner tag;
- extracting character data from the selected frame's region of interest.

9. Method according to claim 8, wherein the classification model is implemented using at least the following features extracted from the output of the image processing module: number of letters, position width and height of character data contained in a region of interest of a frame having an embedded banner tag.

10. Method according to claim 9, wherein a region of interest is classified as containing a banner tag if said region of interest is positioned in a bottom third of a frame.

11. Method according to any of the claims 8 to 10, wherein the classifier implements a K-means algorithm.

12. Method according to any of the claims 7 to 11, wherein the image processing module is a cloud-based module, such as the Google Cloud Vision.

13. Method according to any of the previous claims, wherein the step of providing the video clip in a viewing interface comprises:
- indexing content bookmarks in a data structure of content bookmarks; said data structure relating a content bookmark with the respective video clip.

14. The method according to claim 13, wherein the user command is a search string; the search string being interpreted in a query mechanism adapted to identify the specific content bookmark.

15. A system comprising one or more processors adapted to implement the method of claims 1 to 14.
